# EUROPEAN PATENT APPLICATION

(11) **EP 2 278 535 A1**
(43) Date of publication of application: **26.01.2011**
(21) Application number: 09010592.5
(22) Date of filing: 18.08.2009
(51) Int. Cl.: G06Q 10/00, G06K 19/07

(54) **Provision of a tag-based service using a broker server**

(30) Priority: 16.07.2009 EP 09165679
(71) Applicant: Vodafone Holding GmbH, 40213 Düsseldorf (DE)
(72) Inventor: Eschenauer, Laurent, 4102 Ougrèe (BE); Weisscher, Alard, 6231 LG Meerssen (NL); Hoeksel, Sebastiaan, 6229 VN Maastricht (NL)
(74) Representative: Jostarndt, Hans-Dieter

(57) **Abstract**

The invention relates to a method for providing a tag-based service. The method comprises the steps of: (i) registering in a broker server (109) an allocation between at least one application server (111) and a tag (101), (ii) reading an identification code included in the tag (101) using a reader device (102), (iii) transmitting the identification code from the reader device (102) to the broker server (109) via a communication network (104), (iv) in the broker server (109) determining the application server (111) using the allocation, (v) sending from the broker server (109) to the application server (111) a notification that the tag (101) has been read, and (vi) executing a predetermined action in response to a receipt of the notification in the application server (111). Furthermore, the invention relates to a system for executing the method.

## Description

The invention relates to the field of tag-based services. In particular, the invention relates to a method and a system for providing a tag-based service.

A tag-based service is executed upon reading a so called tag, which is provided at certain location or attached to certain product, for example. The tag is read using a reader unit, which usually comprises a special application for processing information read from the tag. The application uses the information to execute a predetermined action. For instance, the application may invoke a web page specified in the read information, which is to be presented at the reading device, or, using the read information, the application may control the transmission of a message to an application server in order to trigger a further action executed by the application server.

Using a tag-based service, a service user may receive information on products or services, order products or services or may perform certain transactions, such as financial transactions, for example. For instance, tags for accessing such services may be provided in advertisements or on products. Further examples of tag-based services are location-related services where a tag is provided at certain location or control point and the action triggered upon reading the tag refers to the presence of the user of the reader device at this location or to a passing of the control point. For instance, such location-related tags may be used to for entrance and access control in buildings or other facilities and for executing payment transactions relating to entrance fees.

For providing tag-based services, tags are used which can be read by electronic reader units, when the reader units are brought in proximity to the tags. For this purpose, different tag technologies can be used. For instance, a tag may be a barcode which is optically read and analyzed by the reader device. As an alternative, a tag may be read via a short range radio connection between the tag and the reader device. Examples of such tags are RFID tags (RFID: Radio Frequency Identification) or NFC tags (NFC: Near Field communication) which can be read by means of a reader device within a short range between a few centimeters and a few ten centimeters.

The reader device may be a mobile communication device, such as a cellular phone, a PDA (Personal Data Assistant) or the like. This allows using a device for reading tags, which a user usually already has at its disposal, so that an extra device for reading tags is not required. Moreover, a mobile communication device is capable of connecting to an application server via a mobile communication network. Therefore, an increasing number of mobile communication devices are being equipped with interfaces, such as, or example, barcode readers or radio modules, for reading tags of the aforementioned types.

In the current situation, each provider of a tag-based service has to provide an application to be installed in mobile communication devices, which allow for processing information read from a tag and providing further functionality in connection with the tag-based service. The application has to be adapted to the available mobile communication devices, and usually, it also has to be adapted to the tag technology used. This is one aspect that makes it difficult and complex to provide a tag-based service. Furthermore, the user of the service has to install the application on his mobile communication device, if the application is not pre-installed in the device. The installation can be quite difficult and may even prevent an owner of a mobile communication to use a tag-based service.

Therefore, it is an object of the present invention to simplify the provision of a tag-based service.

The object is achieved by a method according to claim 1 and by a system according to claim 12. Embodiments of the method and the system are given in the dependent claims.

According to a first aspect of the invention, a method for providing a tag-based service is suggested. The method comprises the following steps:
- registering in a broker server an allocation between at least one application server and a tag,
- reading an identification code included in the tag using a reader device,
- transmitting the identification code from the reader device to the broker server via a communication network,
- in the broker server determining the application server using the allocation,
- sending from the broker server to the application server a notification that the tag has been read, and
- executing a predetermined action in response to a receipt of the notification in the application server

According to a further aspect of the invention, a system or providing a tag-based service is suggested. The system comprises a broker server storing an allocation between at least one application server and a tag. The broker server further comprises an interface for receiving via a communication network an identification code of the tag read by a reading device and the broker server being adapted to determine the application server using the allocation and to send to the application server a notification that the tag has been read upon receipt of the identification code.

It is an advantage of the invention that a reader device, which has read a tag, does not notify the application server directly. Rather, the reader device notifies a broker server which sends a notification of the reading of the tag to the application server. Thus, a special communication interface between the reader device and a specific application server is not necessary. It is sufficient to provide one interface between the reader device and the broker server, which notifies the relevant application servers of the reading of the tag. Furthermore, the invention provides an infrastructure for tag-based services, in which tags are decoupled from a specific service or application server. This allows registering more than one application server in connection with one tag so that several service providers can make use of one tag. The suggested infrastructure also allows that tags are provided by one or more providers which are different from the service providers that can register in connection with the tags. Moreover, the tag technology is abstracted from the service. This means that a service provider does not have to deal with the tag technology. Rather, a service can be provided by registering an application server in the broker server.

Preferably, a reader device is enabled to be used for accessing a tag-based service by means of an application, which is installed in the reader device. The application may receive the identification code read from the tag and may control a transmission of a message to the broker server, the message comprising the identification code. Advantageously, the application can be used in connection with any tag-based service provided by an application server registered in the broker server. An adaption of the application to one or more services is not necessary. Therefore, the application can be "small." The message sent from the reader device to the broker server may be transmitted using any messaging service provided by the communication network. In particular, the communication network may be a mobile communication network. In this case the message may be an SMS (Short Message Service) message, for example.

In one embodiment of the method and the system, the notification sent from the broker server to the application server comprises the identification code, the application server determining the action to be executed based on the identification code. The tag may be provided at a predetermined location and/or it may relate a predetermined service of a service provider. The location at which the tag is provided and/or the service to which the tag is related may be registered in the application server in association to the identification code of the tag. Thus, the identification code allows the application server to determine the action to be executed when the tag is read.

In a further embodiment of the method and the system, the reader device is identified in the broker server, when the identification code sent from the reader device is received in the broker server.

A related embodiment of the method and the system comprises that the reader device is identified in the broker server using a sender address of the reader device, the sender address being included in the notification sent from the broker server to the application server. This allows the application server to execute the action with reference to the reader device or its user. Preferably, the application server may execute the action on behalf of the user. If the communication network is a mobile communication network, the sender address may be an MSISDN (Mobile Subscriber Integrated Services Digital Network Number) allocated to the reader device.

In one embodiment of the method and the system, in the broker server an allocation between the reader device and an identification string is stored, the identification string being included in the notification sent from the broker server to the application server. Thereby, the identity of the reader device is hidden from the application server. This allows a user of the reader device to access the service anonymously. However, the user may register in the application server under a user account, which can be allocated to the identification string by request of the user. Moreover, the identification string allows the application server to communicate with the reader device within the scope of the provided service. For this purpose, the identification string may be allocated to the reader device permanently or temporarily. A temporary allocation may be restricted to a certain period of time or to a predetermined number of messages sent from the application server to the reader device.

The allocation between the reader device and the identification string may be valid for all application servers receiving a notification of the reading of a tag. However, for different application servers different identification strings may be allocated to the reader device. Therefore, in one embodiment of the method and the system, based on the application server the broker server chooses the allocation from a plurality of allocations between the reader device and an identification string stored in the broker server. For instance, this allows allocating to the reader device several identification strings, which are each linked to a user account in an application server.

As described before, the application server may communicate with the reader device, when the application server receives a notification of the reading of a tag. Therefore, in one embodiment of the method and the system, upon receipt of the notification, the application server instructs the broker server to send a response to the reader device, the response comprising information to be presented at the reader device and/or at least one command for instructing the reader device to execute a predetermined action. Advantageously, the response is sent from the broker server to the reader device. Moreover, a communication interface between the application server and the reader device is not required for sending the response to the reader device. The response may comprise information to be presented at the reader device. This may be information related to the location at which the tag is provided or related to the product to which the tag is attached. Furthermore, by means of the response, the reader device can be instructed to execute an action. In principle, this may be any action which can be executed in the reader device. An example of such an action is a request for certain webpage, which is to be presented at the reader device.

A related embodiment of the method and the system provides that the instruction transmitted from the application server to the broker server comprises the sender address or the identification string and the broker server uses the sender address or the identification string to determine the reader device to which the response is sent. Preferably, the instruction comprises the sender address, when the sender address is included in the notification of the reading of the tag sent to the application server. Using the sender address the broker server can directly identify the reader device to which the response is to be sent. If the notification of the reading of the tag comprises an identification string allocated to the reader device, this identification string is included in the instruction to allow the broker server to identify the reader device to which the response is to be sent. The identification is done using the allocation between the identification string and the reader device stored in the broker server.

In a further embodiment of the method and the system, the tag is read optically or via a radio connection between the tag and the reader device. An example of a tag, which is read optically, is a barcode, which may be provided at certain location or on certain product. An example of a tag which is read via a radio connection between the tag and the reader device is an inactive or a passive RFID tag or an NFC tag.

In one embodiment of the method and the system, the reader device is a mobile communication device and the communication network is a mobile communication network to which the reader device is connected. A mobile subscriber usually has its mobile communication device at its disposal in many situations. When the mobile communication device is used as reader device, the user does not have to carry an additional device for accessing a tag-based service.

The aforementioned and other aspects of the invention will also be apparent from and elucidated with reference to the embodiments described hereinafter making reference to the drawings.

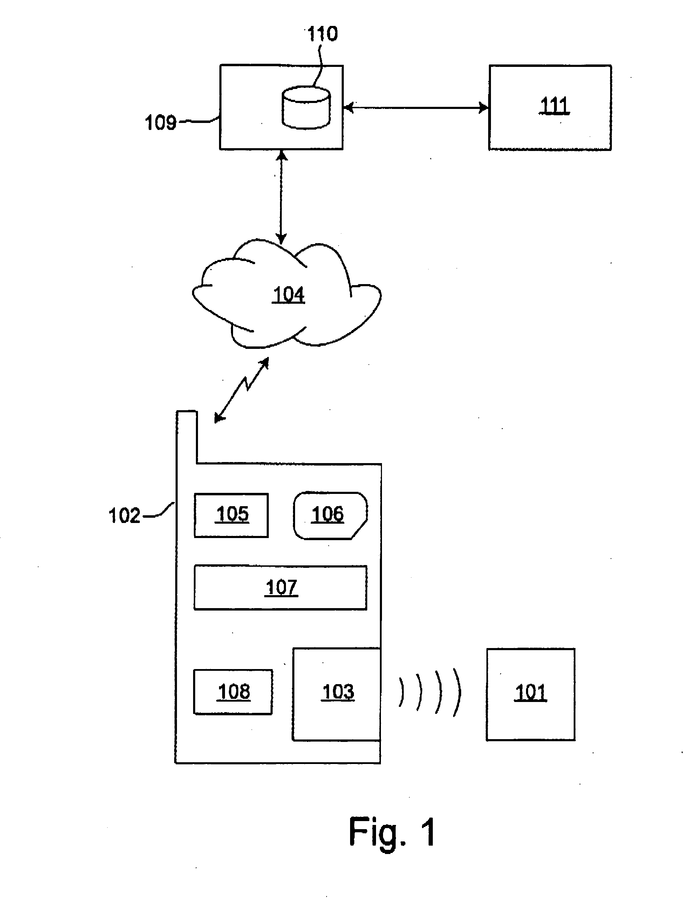

Reference will be made by way of example to the accompanying drawings in which
- Fig. 1: shows a schematic block diagram of a system for providing a tag-based service.

For providing one or more tag-based services, the system depicted in figure 1 comprises a plurality of tags 101, one of which is shown in figure 1. Each tag 101 comprises information that can be read by means of a reader device 102, when the reader device 102 is brought in proximity to the tag 101. Preferably, the information can be read wirelessly from the tags 101. In different embodiments of the tags 101, the information may be read optically, acoustically or using radio waves. In particular, the tags 101 may be configured as barcodes or as electronic devices which can be read using a radio connection between the tags 101 and a reader device 102. Examples of such electronic devices are active and passive RFID tags or NFC tags. Likewise, the tags 101 may be electronic devices providing a wired interface for reading the information included in the tags 101. The tags may be provided at predetermined locations so that it can be determined that a reader device 102 reading a tag 101 is located at certain position or passes certain point. For instance, the tags 101 may be provided at entrances or exits of buildings or other facilities allowing to determine that a user of a reader device 102 enters or leaves the building or facility when a tag 101 is read. Tags 101 may also be provided at certain locations of interest allowing determining that a user of a reader device 102 finds oneself at certain place. In addition or as an alternative, tags 101 may be provided for accessing location-independent service, such as, for example, for receiving information relating to a product, for ordering products or for providing further services. For instance, a user of a reader device 102 may retrieve information on a product or may order a product by reading the attached tag 101.

The tags 101 provided in the system may be tags of different types. In particular, this allows choosing the most suitable tag technology for a tag-based service provided in the system. For instance, tags 101, which are attached to products, may be configured as barcodes. Such tags can be easily and cost-efficiently attached to products. Furthermore, barcodes which are already present on certain products, such as, for example IAN barcodes (IAN: International Article Number), can be used as tags 101 for providing tag-based services in the present system. Tags 101, which are provided at certain locations, may however be configured as electronic devices, particularly as radio devices, since such electronic tags 101 can usually be read more easily and reliably.

Although figure 1 shows only one reader device 102, a plurality of reader devices 102 can be used in the system, each reader device 102 belonging to a user of a tag-based service. In order to read the tags 101, a reader device 102 comprises at least one interface unit 103, which is configured to acquire information from tags 101 of certain type. The interface unit 103 may be a radio module configured to establish a radio connection to radio tags 101 or it may be a barcode reader, for example. If other tags 101 than radio tags or barcodes are provided in the system, the interface unit 103 may be configured in a different way suitable for reading information from such tags 101. If tags 101 of several types are provided, the reader device 102 preferably disposes of different interface units 103, where each interface unit 103 is configured to read information from tags 101 of one type. However, if tags 101 of different types are provided in the system, a reader device 102 does not need to include an interface unit 103 for each type of tag 101. Rather, a reader device 102 may be configured to read information only from some types of tags 101.

The reader devices 102 used in the system depicted in figure 1, can be connected wirelessly to a mobile communication network 104. For this purpose, a reader device 102 comprises a radio module 105 which is configured according to the type of the mobile communication network 104. The mobile communication network 104 may be a GSM or UMTS network, for example (GSM: Global System for Mobile Communications, UMTS: Universal Mobile Telecommunications System). Likewise, a mobile communication network 104 may be configured according to a different mobile communication standard. The radio module 105 is connected to an identification module 106, which provides applications and data for identifying and authenticating the reader device 102 in the mobile communication network 104. The application may be configured as a SIM application, if the mobile communication network 104 is a GSM network, and the application may be configured as a USIM application, if the mobile communication network 104 is a UMTS network (SIM: Subscriber Identification Module, USIM: Universal Subscriber Identification Module). As common in mobile communications, the identification module 106 is configured as a smartcard, which is removably inserted into the reader device 102. It comprises a microcontroller that executes the aforementioned identification and/or authentication application and allows for executing further applications, which are installed in the identification module 106.

For interacting with the user, a reader device 102 includes a user interface 107, which may comprise a display unit and an input unit, such as, for example a keyboard. The operation of the reader device 102 is controlled by a processor unit 108. The processor unit 108 interfaces with the components of the reader device 102 and allows for executing applications providing certain functionalities of the reader device 102.

The reader devices 102 may be dedicated devices used for accessing tag-based services. However, the reader devices 102 may likewise be configured as mobile communication devices which are used in the mobile communication network 104 to communicate with communication partners. In particular, a reader device 102 may be a cellular phone, a PDA or the like. Such devices may be equipped with suitable interface units 103 for reading tags 101 of one or more types. Using such mobile communication devices as reader devices 102 has the advantage that a user has such devices at his disposal in many situations and does not need to carry a further reader device 102 for accessing the tag-based services.

Via the mobile communication network 104, the reader devices 102 used in the system for providing tag-based services can communicate with a broker server 109, which is likewise connected to the mobile communication network 104. In the broker server 109, the tags 101 provided in the system are registered in a database 110. Each tag 101 comprises an identification code which can be read by the reader devices 102. Preferably, the identification code is the only information provided from a tag 102 to a reader device 102. Preferably, an identification code is uniquely assigned to a tag 101 allowing unambiguously identifying the tag 101. And, for each tag 101 one or more service providers which provide a service in connection with the tag 101 can register in the broker server 109. When a service provider is registered in connection with certain tag 101, the broker server 109 notifies the service provider of the reading of the tag 101 and the service provider may execute certain actions that are provided in the service. In one embodiment, each service provider operates an application server 111 including application logic for providing the service. By way of example, in figure 1, one application server 111 of a service provider is depicted. In the database 110, the application servers 111 of the different service providers are registered in association to the tags 101, which trigger the execution of a service by the respective application server 111. The application servers 111 may be connected to the broker server 109 via a network, which is not shown in figure 1, and they may access the broker server 109 using a suitable API (Application Programming Interface).

When a tag 101 of the system is read by a reading device 102, the reading device 102 reads the identification code stored in the tag 101. Then, the reader device 102 sends a message to the broker server 109 to inform the broker server 109 that the specific tag 101 has been read. The message may comprise the identification code read from the tag 101 allowing the broker server 109 to identify the tag 101.

In the reader devices 102, the reading of a tag 101 is determined by a reading application. Upon receiving the identification code of the read tag 101, the reading application generates the message comprising the identification code and controls the transmission of the message to the broker server 109. Furthermore, the reading application may be configured to control the interface unit 103 in the process of reading a tag 101. In one embodiment, the reading application is installed and executed in the processor unit 108 of the reader device 102. It may be pre-installed in the processor unit 108 before the reader device 102 is distributed to customers. Likewise, the user of the reader device 102 may install the reading application after having purchased the reader device 102. As an alternative, the reading application may be installed and executed in the identification module 106 inserted into the reader device 102. This allows a mobile network operator issuing the identification module 106 to pre-install the reading application in the identification module 106. Furthermore, the user can use the reading application with any suitable reader device 102 into which the identification module 106 is inserted.

The message sent by a reader device 102 may be transmitted to the broker server 109 by any suitable bearer service provided by the mobile communication network 104. In one embodiment, the message is an SMS message, which is addressed to the broker server 109 using an MSISDN (Mobile Subscriber Integrated Services Digital Network Number) assigned to the broker server 109 and stored in the reading application. The reading application may generate and send the message automatically upon reading the identification code from a tag 101. Likewise, it may be provided that the message is sent only after a corresponding confirmation has been given by the user of the reader device 102 using the user interface 107.

Upon receiving a message from a reader device 102, the broker server 109 determines the identification code included in the message. Using the database 110, the broker server 109 then determines the application servers 111, which are registered for receiving notifications of reading events in connection with the tag 101 identified by the identification code. Thereupon, the broker server 109 generates one or more notification messages and sends the notification messages to the determined application servers 111 thereby informing the application servers 111 that a specific tag 101 has been read by a reader device 102. Preferably, the notification message also includes the identification code assigned to the tag 101 so that the application servers 111 can identify the read tag 101.

When the broker server 109 receives a message from the reader device 102, it preferably also identifies the reader device 102 or its user. This may be done using a sender address that has been incorporated into the message by the reader device 102. In case the message is an SMS message, the sender address may be an MSISDN allocated to the reader device 102 or its identification module 106.

In the notification messages sent to the application servers 111 registered for reading events concerning a specific tag 101, the broker server 109 may also include information identifying the reader device 102 or its user. This information may be the sender address included in the message received from the reader device 102 or it may be a user-ID allocated to the sender address in the database 110. The use of a user-ID allows for anonymising the user of the reader device 102 since the allocation to the sender address that may be publicly available is secretly stored in the broker server 109. However, the user may register in an application server 111 under the user-ID so that the application server 111 can provide services to specific registered users. The user-ID may be the same for each application server 111. In a further embodiment, the broker server 109 may allocate different user-IDs to the user's reader device 102 for different application servers 111. For this purpose, for each application server 111 registered in the broker server 109 an allocation between the identity of the user or its reader device 102 and a user-ID is stored. When the broker server 109 notifies an application server 111 that a tag 101 has been read, the broker server 109 determines the user-ID allocated to the user's reader device 102 and includes the determined user-ID into the notification sent to the application server 111.

In order to allow an application server 111 to temporarily communicate with a reader device 102 after the reader device 102 has read a specific tag 101, the broker server 109 may incorporate into the notification message sent to the application server 111 a session-ID instead of a user-ID associated to the reader device 102. In the broker server 109 the session-ID is temporarily linked to the reader device 102 and the link may be valid for a predetermined period of time or for a predetermined number of messages to the reader device 102. Using the session-ID the communication between the application server 111 and the reader device 102 is affected via the broker server 109. This allows for a communication between the application server 111 and the reader device 102 while the identity of the reader device 102 is completely hidden from the application server 111.

It can also be provided that to different application servers 111 notification messages with different content in view of the identity of the user or its reader device 102 can be sent. Preferably, for each application server 111 registered in the broker server 109 it is specified whether information about the user or its reader device 102 is provided and which information is provided. Here, the aforementioned information comes into consideration. For instance, one or more application servers 111 receive notifications comprising the sender address of the user's reader device 102 and one or more further application servers 111 may receive notifications comprising a user-ID allocated to the sender address by the broker server 109. Other application servers 111 receive notifications which do not comprise information about the identity of the user or its reader device 102. The information included in the notifications by the broker server 109 may depend on a subscription of the application servers 111 for receiving notifications from the broker server 109 and the subscription may be adapted to the service provided by the application server 111.

When an application server 111 receives a notification message from the broker server 109 notifying the application server 111 that certain tag 101 has been read by a reader device 102, the application server 111 invokes one or more actions provided in the service offered by the application server 111. These may be any actions, which can be executed within the scope of a tag-based service. For instance, the service may involve updating a location of the user of the reader device 102 to the location of the tag 101 or the execution of predetermined transactions on behalf of the user of the reader device 102. For instance, the updated location of the user may be communicated to further users of the service, which have subscribed for location updates of the user of the reader device 102. This allows for providing a so-called social network service. Likewise, it may be registered that a user has accessed or left a building or other facility which disposes of tags 101 at its entrance and/or exit. Transactions executed upon the reading of a tag 101 may include financial transactions, which may be used for charging the user for entering certain building or facility, for example. When the user of the reader device 102 that has read a tag 101 is identified in the message received from the broker server 109 and if required by the provided service, the application server 111 may execute the action with reference to the user of the reader device 102. In other cases, the application server 111 may execute the action without reference to a specific reader device 102 or user.

The action executed by the application server 111 may also include sending a response to the reading of the tag 101 to the reader device 102. Preferably, the response is sent from the broker server 108 to the reader device 102. The broker server 109 is instructed to send the response to the reader device 102 by the application server 111. The instructions comprise information about the reader device 102 to which the response is to be transmitted. This may be the information about the reader device 102, which has been given in the message sent from the broker server 109 to the application server 111. As described before, this may be the sender address of the reader device 102, a user-ID associated to the reader device 102 or a session-ID which is temporarily associated to the reader device 102. When the broker server 109 receives the instructions, it determines the reader device 102 to which the response is to be addressed and sends the response to the reader device 102.

The response may include information which is provided by the application server 111 for presentation at the reader device 102. The information may be included in the instructions sent to the broker server 109 and the broker server 109 may forward the information to the reader device 102. This may be done by means of a message from the broker server 109 to the reader device 102, which may be sent via any suitable bearer service of the mobile communication network 104. Particularly, the message may be an SMS message or an MMS message (MMS: Multimedia Messaging Service). In a specific embodiment, the information may refer to the location of the tag 101 read by the reader device 102. Thus, the reader device 102 can retrieve location-related information from an application server 111 via the broker server 109.

Furthermore, the response sent from the broker 109 to the reader device 102 may include commands for affecting the operation of the reader device 102 and/or for triggering activities on the reader device 102. The commands may be generated in the broker server 109 upon instruction by the application server 111, or the commands may be generated in the application server 111 and forwarded to the reader device 102 by the broker server 109. By means of such a command the reader device 102 may be instructed to display information, to launch an application installed in the reader device 102, to play a tune or to execute a further action. The application, which is launched upon receiving the command, may be a browser application for browsing the internet, for example. By means of the command, the browser application may also be instructed to open a predetermined webpage given in the command. The webpage may be provided by the application server 111 or another server of the same service provider and may present information to the user of the reader device 102 or may interact with the user in another way. For instance, the information may again be related to the location of the tag 101, which has been read by the reader device 102. Also, the application server 111 may communicate with the user of the reader device 102 via a webpage which is provided by the application server 111 and which is opened at the reader device 102 due to a command received in the reader device 102 as a response to a reading of a tag 101.

In particular, a dialogue between the application server 111 and the user of the reader device 102 can be used to request the user to register in an application server 111 in connection with the service provided by the application server 111. If the broker server 109 identifies the user or its reader device 102 towards the application server 111 using a user-ID, the application server 111 may link the user-ID and a user account created by the user in the registration process. The application server 111 may also link an existing user account in the application server 111 to the user-ID, which is allocated to the user's reader device 102 in broker server 109.

In a dialogue with the user of the reader device 102, the application server 111 may also request a confirmation of the user for an action executed by the application server 111, such as, for example, a billing transaction.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A method for providing a tag-based service comprising the steps of:
- registering in a broker server (109) an allocation between at least one application server (111) and a tag (101),
- reading an identification code included in the tag (101) using a reader device (102),
- transmitting the identification code from the reader device (102) to the broker server (109) via a communication network (104),
- in the broker server (109) determining the application server (111) using the allocation,
- sending from the broker server (109) to the application server (111) a notification that the tag (101) has been read, and
- executing a predetermined action in response to a receipt of the notification in the application server (111).

2. The method according to claim 1, wherein an application is installed in the reader device (102), the application receiving the identification code read from the tag (101) and controlling a transmission of a message to the broker server (109), the message comprising the identification code.

3. The method according to claim 1 or 2, wherein the notification comprises the identification code, the application server (111) determining the action based on the identification code.

4. The method according to one of the preceding claims, wherein the reader device (102) is identified in the broker server (109), when the identification code sent from the reader device (102) is received in the broker server (109).

5. The method according to claim 4, wherein the reader device (102) is identified in the broker server (109) using a sender address of the reader device (102), the sender address being included in the notification sent from the broker server (109) to the application server (111).

6. The method according to one of the preceding claims, wherein in the broker server (109) an allocation between the reader device (102) and an identification string is stored, the identification string being included in the notification sent from the broker server (109) to the application server (111).

7. The method according to claim 6, wherein based on the application server (111), the broker server (109) chooses the allocation from a plurality of allocations between the reader device (102) and an identification string stored in the broker server (109).

8. The method according to one of the preceding claims, wherein upon receipt of the notification, the application server (111) instructs the broker server (109) to send a response to the reader device (102), the response comprising information to be presented at the reader device (102) and/or at least one command for instructing the reader device (102) to execute a predetermined action.

9. The method according to claim 8, wherein the instruction transmitted from the application server (111) to the broker server (109) comprises the sender address or the identification string and the broker server (109) uses the sender address or the identification string to determine the reader device (102) to which the response is sent.

10. The method according to one of the preceding claims, wherein the tag (101) is read optically or via a radio connection between tag (101) and the reader device (102).

11. The method according to one of the preceding claims, wherein the reader device (102) is a mobile communication device and the communication network (104) is a mobile communication network to which the reader device (102) is connected.

12. A system for providing a tag-based service comprising a broker server (109) storing an allocation between at least one application server (111) and a tag (101), the broker server (109) comprising an interface for receiving via a communication network (104) an identification code of the tag (101) read by a reading device and the broker server (109) being adapted to determine the application server (111) using allocation and to sent to the application server (111) a notification that the tag (101) has been read upon receipt of the identification code.

13. The system of claim 12, further comprising the reader device (102), the reader device (102) including reading means for reading the identification code included in the tag (101) and a communication means adapted to send the read identification code to the broker server (109) via the communication network (104).

14. The system according to claim 12 or 13, further comprising the application server (111), the application server (111) being configured to execute a predefined action in response to a receipt of the notification sent from the broker server (109).
